# FASCICULE DE BREVET EUROPEEN

(11) **EP 0 569 278 B1**
(45) Date de publication et mention de la délivrance du brevet: **10.07.1996**
(21) Numéro de dépôt: 93401137.0
(22) Date de dépôt: 03.05.1993
(51) Int. Cl.: B60R 16/02, H02J 7/14

(54) **Dispositif d'alimentation électrique sous tension élevée d'un circuit auxiliaire de véhicule automobile**
Hochvolt-Spannung-Stromversorgungsschaltung eines Zusatzstromkreises für ein Kraftfahrzeug
Electrical high-tension supply device of an auxiliary circuit of a vehicle

(30) Priorité: 07.05.1992 FR 9205647
(43) Date de publication de la demande: 10.11.1993
(73) Titulaire: VALEO EQUIPEMENTS ELECTRIQUES MOTEUR, 94000 Créteil (FR)
(72) Inventeur: Galliet, Michel, F-94370 Sucy en Brie (FR)
(74) Mandataire: Gamonal, Didier

(56) Documents cités:
- EP-A- 0 337 155
- EP-A- 0 402 641
- DE-A- 3 801 478
- GB-A- 1 483 033
- US-A- 4 604 565

## Description

La présente invention concerne un dispositif d'alimentation électrique sous tension élevée d'un circuit auxiliaire d'un véhicule automobile (DE-A-3801478).

Les circuits électriques d'un véhicule automobile sont habituellement alimentés par une batterie d'accumulateurs chargée par un alternateur dont le courant d'excitation est régulé par un régulateur.

Si une telle configuration permet d'alimenter sous tension nominale les organes classiques tels que la ventilation, la climatisation, l'éclairage, le problème reste entier quand il s'agit d'alimenter sous une tension supérieure un circuit auxiliaire constitué par exemple par un appareil assurant le désembuage et/ou le dégivrage d'un pare-brise et/ou d'une lunette arrière le plus rapidement possible.

Pour créer une surtension propre à assurer les fonctions précitées, on a proposé, à partir de la tension nominale délivrée par l'alternateur, d'utiliser un transformateur élévateur de tension pour alimenter un tel circuit auxiliaire. Cette solution présente l'inconvénient de nécessiter un équipement supplémentaire, un transformateur qui, de plus, délivre une valeur de tension unique adaptée à la fonction de dégivrage mais souvent élevée pour une simple fonction de désembuage.

Une autre solution consiste à équiper l'alternateur de deux enroulements statoriques identiques associés à des moyens de commutation parallèle-série/série-parallèle et une modification du niveau de régulation de la tension de sortie redressée alternateur. La conception d'un alternateur de ce type est coûteuse par la présence des deux enroulements statoriques et les moyens de commutation et de régulation associés nécessitent des moyens de sécurité et de protection complémentaires pour éviter toute surcharge accidentelle de la batterie pendant l'opération de dégivrage.

De tels moyens sont complexes et leur mise en oeuvre est délicate, ce qui conduit à un surcoût important de l'ensemble du dispositif.

La présente invention résout ces problèmes et propose à cet effet un circuit d'alimentation électrique multi-tension pour l'alimentation de plusieurs circuits électriques de véhicule automobile, ayant un circuit principal qui comprend une batterie chargée par un premier alternateur délivrant une tension à un réseau principal et dont le courant d'excitation est régulé par un premier régulateur, comprenant :
- un circuit auxiliaire constitué d'un second alternateur dont le courant d'excitation est régulé par un second régulateur, et délivrant une tension réseau auxiliaire supérieure à la tension réseau principal
- au moins une résistance constituant un élément chauffant de pare-brise et/ou de lunette arrière du véhicule, ladite résistance étant reliée au second alternateur
- des moyens de commutation reliés par l'une de leurs bornes à la résistance et agencés de manière à pouvoir alimenter ladite résistance, soit sous une première tension égale à la somme des tensions réseau des premier et second alternateurs, soit sous une seconde tension égale à la tension réseau auxiliaire du second alternateur.

Selon d'autres caractéristiques de l'invention :
- la résistance est alimentée sous ladite première tension pour une opération de dégivrage et sous ladite seconde tension pour une opération de désembuage
- pour une valeur de résistance voisine de 3 ohms, la tension réseau du premier alternateur est de préférence égale à 14 Volts et la tension réseau du second alternateur est de préférence égale à 56 Volts
- pour une valeur de résistance voisine de 2 ohms, la tension réseau du premier alternateur est de préférence égale à 14 Volts et la tension réseau du second alternateur est de préférence égale à 42 Volts.

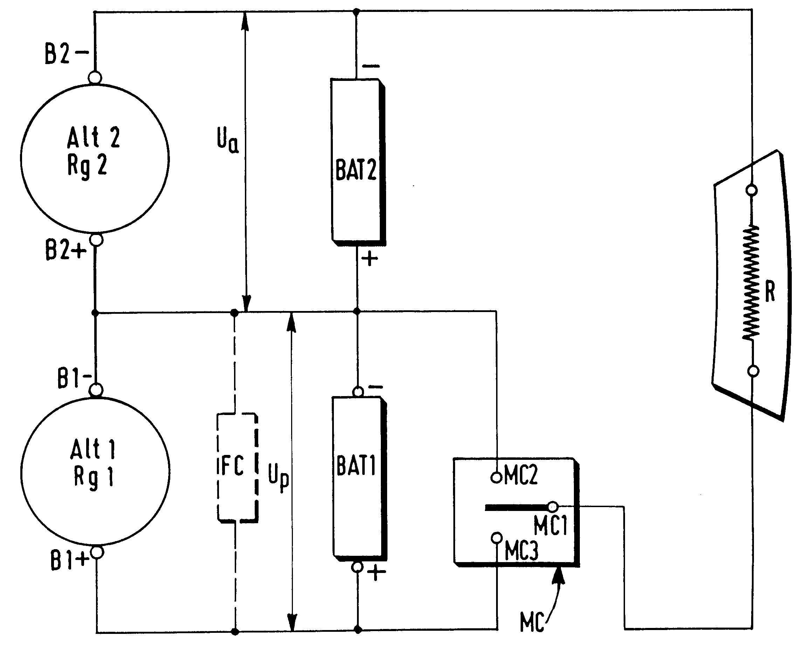

La présente invention sera mieux comprise à la lecture de la description qui va suivre en regard de la figure unique qui représente le schéma électrique simplifié du dispositif selon l'invention.

On se réfère à la figure unique qui illustre un premier alternateur Alt1 avec son régulateur associé Rg1, dont les bornes B1- et B1+ sont reliées respectivement aux bornes négative et positive d'une batterie BAT1, pour constituer un circuit principal sur lequel viennent s'alimenter les fonctions classiques FC du véhicule telles que l'éclairage par incandescence, les micros-moteurs, les modules électroniques...

Suivant l'invention, en parallèle sur le circuit principal est constitué un circuit auxiliaire comportant un second alternateur Alt2 avec son régulateur associé Rg2, la borne B2+ de l'alternateur Alt2 étant reliée à la borne B1- de l'alternateur Alt1.

L'alternateur Alt2 est conçu pour fournir une tension réseau auxiliaire Ua supérieure à la tension réseau principal Up fournie par l'alternateur Alt1.

De préférence, la tension réseau auxiliaire Ua est multiple de la tension réseau principal Up.

Dans l'exemple représenté, les bornes B2+ et B2-de l'alternateur Alt2 sont reliées respectivement aux bornes positive et négative d'une batterie BAT2, la borne positive de la batterie BAT2 étant reliée par ailleurs à la borne négative de la batterie BAT1.

La borne B2- de l'alternateur Alt2 est reliée à l'une des extrémités d'une résistance R constituant par exemple l'élément chauffant d'un pare-brise de véhicule automobile.

L'autre extrémité de la résistance R est reliée à une première borne MC1 d'un moyen de commutation MC.

Le moyen de commutation MC comporte par ailleurs deux autres bornes MC2 et MC3 reliées respectivement au point commun B1-,B2+ des alternateurs Alt1,Alt2 et à la borne B1+ de l'alternateur Alt1.

Bien entendu la résistance R peut être constituée de deux résistances en série constituant les éléments de chauffage et du pare-brise et de la lunette arrière.

On appréciera que la batterie BAT1 est chargée par l'alternateur Alt1, dont le courant d'excitation est régulé par le régulateur Rg1 de manière indépendante par rapport au circuit auxiliaire.

De même la batterie BAT2 est chargée par l'alternateur Alt2, le courant d'excitation de ce dernier étant régulé par le régulateur Rg2 de manière indépendante par rapport au circuit principal.

Autrement dit, les deux alternateurs Alt1,Alt2 sont d'une construction classique ce qui diminue le coût d'un tel dispositif.

De préférence la batterie BAT1 présente une tension nominale de 12 Volts et l'alternateur Alt1 est conçu pour délivrer une tension réseau Up de 14 Volts.

Pour le circuit auxiliaire, l'alternateur Alt2 est conçu pour délivrer une tension réseau Ua comprise entre 40 et 60 Volts pour une valeur de résistance comprise entre 2 et 3 ohms.

De préférence l'alternateur Alt2 délivrera une tension réseau Ua de 56 Volts pour une valeur de résistance R voisine de 3 ohms et une tension réseau Ua de 42 Volts pour une valeur de résistance R voisine de 2 ohms.

Il est à noter que, dans le cadre de la présente invention, la batterie BAT2 n'est pas obligatoire pour un bon fonctionnement du dispositif tel qu'il sera décrit plus avant.

Dans le cas où la batterie BAT2 fait néanmoins partie du dispositif, celle-ci présente une tension nominale de 48 Volts pour une valeur de résistance R voisine de 3 ohms et une tension nominale de 36 Volts pour une valeur de résistance R voisine de 2 ohms.

Le fonctionnement d'un tel dispositif est le suivant.

Dans la position de repos, le moyen de commutation MC occupe la position neutre représentée sur la figure, la résistance R n'est pas alimentée.

Lorsqu'une opération de dégivrage rapide est demandée, le moyen de commutation MC est actionné de manière à ce que ses bornes MC1 et MC3 soient reliées. La résistance R est alors alimentée sous une tension égale à la somme des tensions réseaux Up + Ua délivrées par les alternateurs Alt1,Alt2.

Suivant les valeurs exprimées plus haut, la tension est égale à 14 + 56 = 70 Volts pour une valeur de résistance R voisine de 3 ohms et égale 14 + 42 = 56 Volts pour une valeur de résistance R voisine de 2 ohms.

Lorsqu'une opération de désembuage est demandée, le moyen de commutation MC est actionné de manière à ce que ses bornes MC1 et MC2 soient reliées. La résistance R est alors alimentée sous une tension égale à la tension réseau Ua de l'alternateur Alt2 soit 56 Volts pour R voisine de 3 ohms ou 42 Volts pour R voisine de 2 ohms.

La commande du moyen de commutation MC, que ce soit pour l'opération de dégivrage ou l'opération de désembuage, peut s'effectuer manuellement à la demande du conducteur du véhicule automobile.

Elle peut également s'effectuer à travers un automatisme installé sur le véhicule et réagissant conditionnellement à des valeurs de paramètres de l'environnement atmosphérique du véhicule, tel que la température extérieure par rapport à une valeur de référence.

La présente invention n'est nullement limitée aux formes de réalisation décrites et représentées mais englobe toute variante que l'homme de l'art pourrait y apporter.

En particulier le moyen de commutation MC peut être réalisé à l'aide d'éléments électromagnétiques tels que des relais ou d'éléments semi-conducteurs tels que des transistors, sans pour cela sortir du cadre de l'invention.

## Revendications

1. Dispositif d'alimentation électrique multi-tension pour l'alimentation de plusieurs circuits électriques de véhicule automobile, ayant un circuit principal qui comprend une batterie (BAT1) chargée par un premier alternateur (Alt1) délivrant une tension réseau principal (Up) et dont le courant d'excitation est régulé par un premier régulateur (Rg1), comprenant un circuit auxiliaire constitué d'un second alternateur (Alt2), dont le courant d'excitation est régulé par un second régulateur (Rg2), délivrant une tension réseau auxiliaire (Ua) supérieure à la tension réseau principal (Up) et au moins une résistance (R) constituant un élément chauffant de pare-brise et/ou de lunette arrière du véhicule, ladite résistance (R) étant reliée au second alternateur (Alt2), caractérisé en ce qu'il comprend des moyens de commutation (MC) reliés par l'une de leurs bornes (MC1) à la résistance (R) et agencés de manière à pouvoir alimenter ladite résistance (R), soit sous une première tension égale à la somme des tensions réseau (Up + Ua) des premier et second alternateurs (Alt1,Alt2), soit sous une seconde tension égale à la tension réseau auxiliaire (Ua) du second alternateur (Alt2).

2. Dispositif selon la revendication 1, caractérisé en ce que la résistance (R) est alimentée sous ladite première tension pour une opération de dégivrage et sous ladite seconde tension pour une opération de désembuage.

3. Dispositif selon l'une des revendications précédentes, caractérisé en ce que, pour une valeur de résistance (R) voisine de 3 ohms, la tension réseau (Up) du premier alternateur (Alt1) est de préférence égale à 14 Volts et la tension réseau du second alternateur (Alt2) est de préférence égale à 56 Volts.

4. Dispositif selon l'une des revendications 1 ou 2, caractérisé en ce que, pour une valeur de résistance (R) voisine de 2 ohms, la tension réseau (Up) du premier alternateur (Alt1) est de préférence égale à 14 Volts et la tension réseau du second alternateur (Alt2) est de préférence égale à 42 Volts.

5. Dispositif selon la revendication 1, caractérisé en ce que le circuit auxiliaire comprend une batterie (BAT2) chargée par l'alternateur (Alt2).

6. Dispositif selon l'une quelconque des revendications précédentes, caractérisé en ce que les moyens de commutation (MC) sont commandés conditionnellement à des valeurs de paramètres de l'environnement atmosphérique du véhicule, tel que la température extérieure par rapport à une valeur de référence.

## Claims

1. A multi-voltage electrical supply apparatus, for supplying a plurality of electrical circuits of a motor vehicle having a main circuit which includes a battery (BAT1), which is charged by a first alternator (Alt1) delivering a main network voltage (Up) and the excitation current of which is regulated by a first regulator (Rg1), comprising an auxiliary circuit constituted by a second alternator (Alt2), the excitation current of which is regulated by a second regulator (Rg2) delivering an auxiliary network voltage (Ua) which is greater than the main network voltage (Up), and at least one resistive element (R) constituting a heating element for the windscreen and/or rear window of the vehicle, the said resistive element (R) being connected to the second alternator (Alt2), characterised in that it includes switching means (MC) connected through one of the terminals (MC1) thereof to the resistive element (R), and arranged in such a way as to be able to supply the said resistive element (R), either at a first voltage equal to the sum of the network voltages (Up + Ua) of the first and second alternators (Alt1, Alt2), or at a second voltage which is equal to the auxiliary network voltage (Ua) of the second alternator (Alt2).

2. Apparatus according to Claim 1, characterised in that the resistive element (R) is supplied at the said first voltage for a deicing operation and at the said second voltage for a demisting operation.

3. Apparatus according to one of the preceding Claims, characterised in that, for a resistance value of the resistive element (R) close to 3 ohms, the network voltage (Up) of the first alternator (Alt1) is preferably equal to 14 volts and the network voltage of the second alternator (Alt2) is preferably equal to 56 volts.

4. Apparatus according to Claim 1 or Claim 2, characterised in that, for a resistance value of the resistive element (R) close to 2 ohms, the network voltage (Up) of the first alternator (Alt1) is preferably equal to 14 volts and the network voltage of the second alternator (Alt2) is preferably equal to 42 volts.

5. Apparatus according to Claim 1, characterised in that the auxiliary circuit includes a battery (BAT2) charged by the alternator (Alt2).

6. Apparatus according to any one of the preceding Claims, characterised in that the switching means (MC) are controlled in response to values of parameters of the atmospheric environment of the vehicle, such as the outside temperature with respect to a reference value.

## Patentansprüche

1. Mehrspannungs-Stromversorgungsschaltung für die Stromversorgung mehrerer Stromkreise eines Kraftfahrzeugs mit einem Hauptstromkreis, der eine Batterie (BAT1) umfaßt, die durch einen ersten Wechselstromgenerator (Alt1) geladen wird, der eine Hauptnetzspannung (Up) liefert und dessen Erregerstrom durch einen ersten Regler (Rg1) geregelt wird, bestehend aus:
- einem Zusatzstromkreis mit einem zweiten Wechselstromgenerator (Alt2), dessen Erregerstrom durch einen zweiten Regler (Rg2) geregelt wird und der eine Zusatznetzspannung (Ua) liefert, die größer als die Hauptnetzspannung (Up) ist, und
- wenigstens einem Widerstand (R), der ein Heizelement für die Windschutzscheibe und/oder die Heckscheibe des Fahrzeugs bildet, wobei dieser Widerstand (R) mit dem zweiten Wechselstromgenerator (Alt2) verbunden ist, **dadurch gekennzeichnet,** daß sie Schalteinrichtungen (MC) umfaßt, die über eine ihrer Klemmen (MC1) mit dem Widerstand (R) verbunden und so angeordnet sind, daß sie den besagten Widerstand (R) entweder mit einer ersten Spannung gleich der Summe der Netzspannungen (Up + Ua) des ersten und zweiten Wechselstromgenerators (Alt1, Alt2) oder mit einer zweiten Spannung gleich der Zusatznetzspannung (Ua) des zweiten Wechselstromgenerators (Alt2) speisen können.

2. Schaltung nach Anspruch 1 , **dadurch gekennzeichnet,** daß der Widerstand (R) mit der besagten ersten Spannung für einen Entfrostungsvorgang und mit der besagten zweiten Spannurg für einen Beschlagentfernungsvorgang gespeist wird.

3. Schaltung nach einem der vorangehenden Ansprüche, **dadurch gekennzeichnet,** daß bei einem Widerstandswert (R) in der Nähe von 3 Ohm die Netzspannung (Up) des ersten Wechselstromgenerators (Alt1) vorzugsweise gleich 14 Volt und die Netzspannung des zweiten Wechselstromgenerators (Alt2) vorzugsweise gleich 56 Volt ist.

4. Schaltung nach einem der Ansprüche 1 oder 2 , **dadurch gekennzeichnet,** daß bei einem Widerstandswert (R) in der Nähe von 2 Ohm die Netzspannung (Up) des ersten Wechselstromgenerators (Alt1) vorzugsweise gleich 14 Volt und die Netzspannung des zweiten Wechselstromgenerators (Alt2) vorzugsweise gleich 42 Volt ist.

5. Schaltung nach Anspruch 1 , **dadurch gekennzeichnet,** daß der Zusatzstromkreis eine Batterie (BAT2) enthält, die durch den Wechselstromgenerator (Alt2) geladen wird.

6. Schaltung nach einem der vorangehenden Ansprüche, **dadurch gekennzeichnet,** daß die Schalteinrichtungen (MC) in Anbindung an Parameterwerte zur atmosphärischen Umgebung des Fahrzeugs anspricht, wie etwa Außentemperatur im Verhältnis zu einem Bezugswert.
